# DEMANDE DE BREVET EUROPEEN

(11) **EP 4 431 949 A1**
(43) Date de publication de la demande: **18.09.2024**
(21) Numéro de dépôt: 23020129.5
(22) Date de dépôt: 15.03.2023
(51) Int. Cl.: G01P 5/14, B63H 9/04, B63H 25/04, G01P 5/00

(54) **METHODE DE MESURE DE LA SURPRESSION / SOUS-PRESSION D'UN SYSTÈME AERODYNAMIQUE AFIN D'OPTIMISER SON RENDEMENT**

(71) Demandeur: Pont, Jose Emmanuel, 1027 Lonay (CH); Mutschler, Nicolas, 1132 Lully (CH); Berthoud, Christophe, 1184 Vinzel (CH)
(72) Inventeur: Pont, Jose Emmanuel, 1027 Lonay (CH); Mutschler, Nicolas, 1132 Lully (CH); Berthoud, Christophe, 1184 Vinzel (CH)

(57) **Abrégé**

La performance d'un système aérodynamique, et en particulier celle d'une voile de bateau, dépend de l'optimisation des profils ainsi que tout les réglages de celle-ci et de l'engin lié à son effet. Pour permettre d'en optimiser le rendement en tout temps et en toutes conditions, l'invention proposée consiste en un système composé d'au moins 3 capteurs ou plus placés sur l'intrados, l'extrados et hors flux. Cette configuration permet de mesurer les contributions individuelles de surpressions ou de sous-pressions et d'en déterminer leur rapports. Le rapport entre sur-pression et sous-pression permet d'optimiser le couple portance/traînée du système aérodynamique considéré que ce soit en temps réel, en post-traitement ou comme paramètre d'un pilotage automatique.

## Description

### Introduction

Une voile ou plus généralement une aile génère de la portance en créant une zone de basse pression sur son extrados et une zone de haute pression sur son intrados. Une aile se déplace en direction de la zone de basse pression par aspiration et s'éloigne de la zone de haute pression par pression, ce qui fait voler et/ou avancer l'aile et en l'occurrence tout engin solidairement connecté à l'aile tel qu'un voilier ou un avion.

L'invention décrite est une méthode appliquée à un voilier, cependant elle s'applique de la même manière à tout système aérodynamique, tel qu'un avion, une aile ou encore une éolienne qui utilise les forces résultantes pour faire voler, tourner ou avancer un engin.

Jusqu'à aujourd'hui, le réglage des voiles pendant la navigation est basé sur des aides visuelles appelées "faveurs". Ces aides permettent au marin de visualiser les flux d'air et de déterminer si ceux-ci sont laminaires dans les voiles, auquel cas les faveurs s'orientent selon ces flux de façon non turbulent. Une des principales théories de la génération de la portance dans la voile est l'effet Coanda, le fait que les flux d'air laminaires collent au profil. Si un flux est turbulent, la pression qui en résulte est fortement réduite et la portance avec elle. L'appareil décrit permet un contrôle fin des valeurs de pression dans des zones bien choisies afin de permettre aux marins de régler précisément les voiles et/ou le cap du bateau pour maximiser leur efficacité. Celui-ci remplace, complémente ou améliore les informations visuelles fournies par les "faveurs".

L'appareil décrit peut également permettre aux fabricants de voiles d'intégrer des informations provenant du monde réel tel qu'observé à l'aide du système, dans le logiciel de simulation des voiles, afin d'affiner le modèle de simulation.

Les inventions existantes dans ce domaine :
- EP1559646A1, "Mesure d'une pression sur une voile", Yves Gaussen, Jean-Jacques Besson, Olivier Desjeux
- GB2349699A, "Indicateur de réglage optimal des voiles à l'aide de capteurs de pression", Trevor Smithlan Bucklitsch
- US3763703A, "Apparatus for trimming sails", Jerome V. Man

Les trois inventions ci-dessus concernent la maximisation de la portance. Cependant, pour pouvoir exploiter au maximum le rendement aérodynamique, un marin doit tenir compte non seulement de la portance, mais aussi de la traînée. Plus la portance augmente, plus la traînée augmente, à tel point que le marin n'optimise pas le mouvement vers l'avant du bateau, ce qui n'est pas adressé par ces inventions. Ces inventions n'abordent pas non plus les aspects pratiques des réglages, où il faut savoir passer d'une solution non réglée à une solution optimale.

Les inventions ci-dessus permettent d'identifier qu'une voile est approximativement bien ou mal réglée mais, sans référentiel de pression hors flux, celles-ci ne permettent pas de déduire la correction à appliquer, soit border ou choquer dans le cas d'une voile de bateau, afin d'obtenir un réglage optimal.

Identifiant la nécessité d'améliorer les solutions existantes et amenant une méthode basée non seulement sur la mesure de la pression différentielle entre l'intrados et l'extrados mais également sur leur proportion respective, l'invention proposée ajoute une mesure de pression hors flux au système aérodynamique considéré.

### Description de l'invention

La nouveauté de ce système est l'ajout d'un capteur de pression hors flux d'air (HF) non soumis aux pressions sur l'intrados ou l'extrados du système aérodynamique considéré. En incluant cette mesure de pression hors flux (HF), il est maintenant possible de fournir non seulement une mesure de la pression différentielle entre l'intrados et l'extrados, mais aussi les différentiels de pressions intrados et extrados rapportés à une mesure hors flux (HF) et donc des différentiels de pressions effectives de chaque côté dans la voile. Il s'agit d'une différence majeure, car il devient possible de disposer désormais des informations sur les contributions individuelles de pression de l'intrados et respectivement de l'extrados, qui sont des informations clés pour maximiser le rapport portance/traînée, obtenu en réglant les tensions dans la voile (forme et angle d'attaque de la voile) et/ou en ajustant le cap du voilier ; cette source d'information quantitative permet d'identifier l'influence du réglage de telle ou telle contribution sur la recherche de l'optimum.

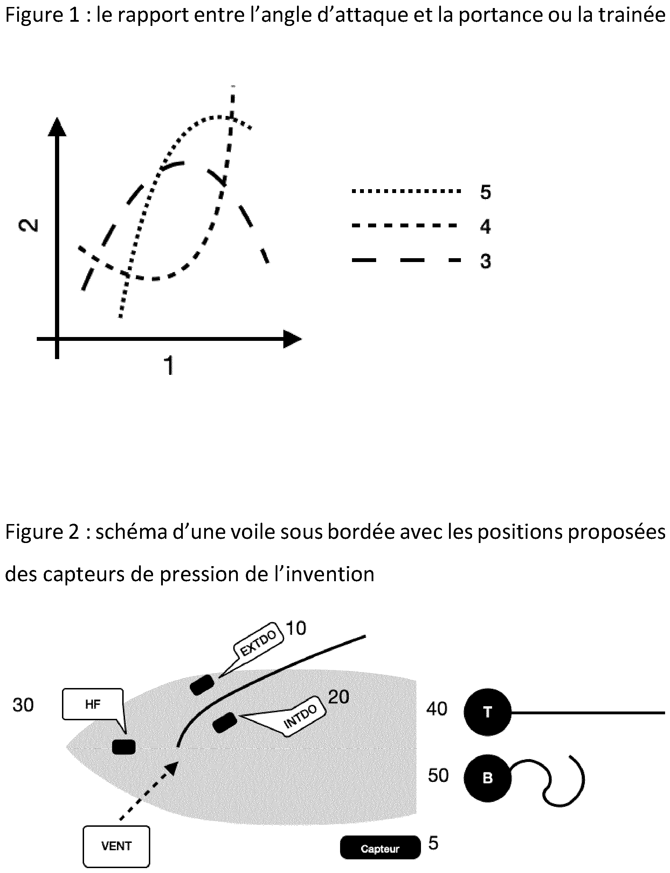

La Figure 1 est un graphe avec en abscisse (1) l'angle d'attaque et en ordonnée (2) la portance ou la traînée. Plus l'angle d'attaque (1) est grand, plus la portance augmente mais avec elle la traînée (2). La courbe (3) illustre la combinaison de la traînée (4) par rapport à la portance (5) dans la recherche de l'optimum. Il est constaté que l'optimum de (3) se situe avant la maximisation de 5.

Les figures 2, 3, 4 et 5 illustrent différentes situations de l'utilisation du capteur de pression hors flux (HF) 30 en plus du capteur de pression de l'extrados (EXTDO) 10 et du capteur de pression de l'intrados (INTDO) 20. Les situations illustrées en bâbord amure sont symétriquement valables sur le bord opposé.

Situation de la figure 2 : La voile doit être bordée et/ou le bateau doit abattre.

Dans cette situation, la grandeur Δ (EXTDO 10, HF 30), qui est la différence de pression entre les valeurs EXTDO 10 et HF 30, indiquera une pression négative car l'extrados a un flux laminaire, par contre la grandeur Δ (INTDO 20, HF 30), qui est la différence de pression entre les valeurs INTDO 20 et HF 30, indiquera une valeur de bien moindre amplitude car le flux à l'intrados n'est pas laminaire. En comparant ces deux valeurs, le marin sait maintenant qu'il doit border la voile et/ou abattre. Cela correspond à une situation où la faveur sous le vent (T 40) montre un écoulement laminaire et la faveur au vent (B 50) un écoulement non laminaire.

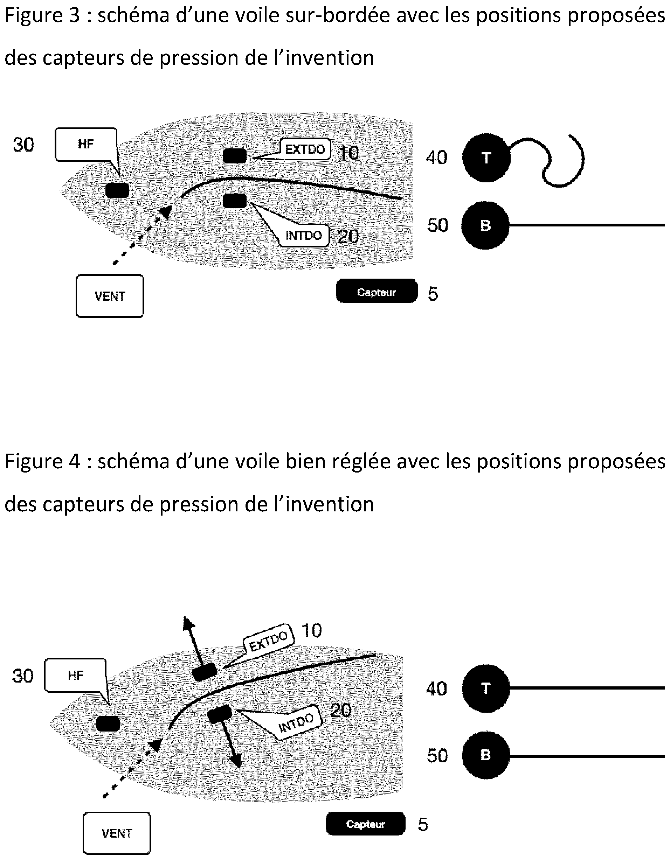

Situation de la figure 3 : La voile doit être choquée et/ou le bateau doit lofer.

De même, mais plus important encore, dans cette situation, INTDO 20 affichera une valeur positive relativement élevée, une surpression, car l'INTDO 20 se trouve en surrégime et l'extrados EXTDO 10 affichera une valeur négative relativement faible car les flux d'air ne sont plus laminaires. Cela correspond à une situation où la faveur sous le vent montre un écoulement non linéaire, turbulent, et le témoin au vent un écoulement laminaire correct.

Dans les deux situations décrites aux figures 2 et 3 et en l'absence d'un capteur de pression hors flux HF 30, il est impossible avec la seule différence de pression intrados / extrados Δ (INTDO 20, EXTDO 10) de faire la différence et de recommander l'action d'optimisation au marin. En effet il s'agit d'un réglage très inefficace et le sur-bordage, qui correspond à une volonté maladroite d'uniquement augmenter la portance sans tenir compte de la traînée est une erreur souvent commise par les navigateurs débutants.

Ceci est très important car cela permet de façon nouvelle d'atteindre l'objectif d'optimiser l'avancement du bateau sans se fier uniquement à l'état visuel des faveurs, mais de pouvoir prendre des décisions de réglages des voiles ou du cap du bateau depuis le cockpit ou la cabine, sans ligne de vue directe vers les faveurs ou lorsque ces faveurs sont inopérantes, par exemple lorsqu'il pleut, pendant la nuit lorsqu'elles ne sont pas ou très peu visibles, en se basant sur les informations de différentiels de pression.

Situation de la figure 4 : Le réglage optimal.

Dans cette situation, au moyen des valeurs EXTDO 10, INTDO 20 et HF 30 et des grandeurs Δ (EXTDO 10, HF 30) et Δ (INTDO 20, HF 30) il devient possible de connaître les contributions individuelles, leurs proportions entre elles et donc d'optimiser le rendement vélique en réglant la voile ou le cap du bateau.

L'invention apporte la possibilité d'effectuer un réglage plus précis, de mieux optimiser le rendement vélique et ce toutes les conditions de navigation :
Grâce à l'introduction du capteur de pression hors flux HF 30, le marin a maintenant la possibilité de mesurer les rapports entre les grandeurs (EXTDO 10 - HF 30) et (INTDO 20 - HF 30) afin d'identifier le meilleur rapport entre eux pour optimiser le rendement du système et ce pour un ou plusieurs points dans la voile.

L'optimisation peut être une interprétation visuelle des grandeurs (EXTDO 10 - HF 30) et (INTDO 20 - HF 30) représentées sous forme graphique et/ou numérique. Elle peut être combinée à un ou plusieurs autres paramètres d'avancement du bateau tel que l'analyse statistique de sa vitesse, de la vitesse du vent, des angles du vent apparent, de la destination vers sa cible et d'autres mesures (par exemple le courant marin) ou des combinaisons simples ou multiples de ces paramètres (par exemple, VMG) ou même avec l'aide de l'intelligence artificielle.

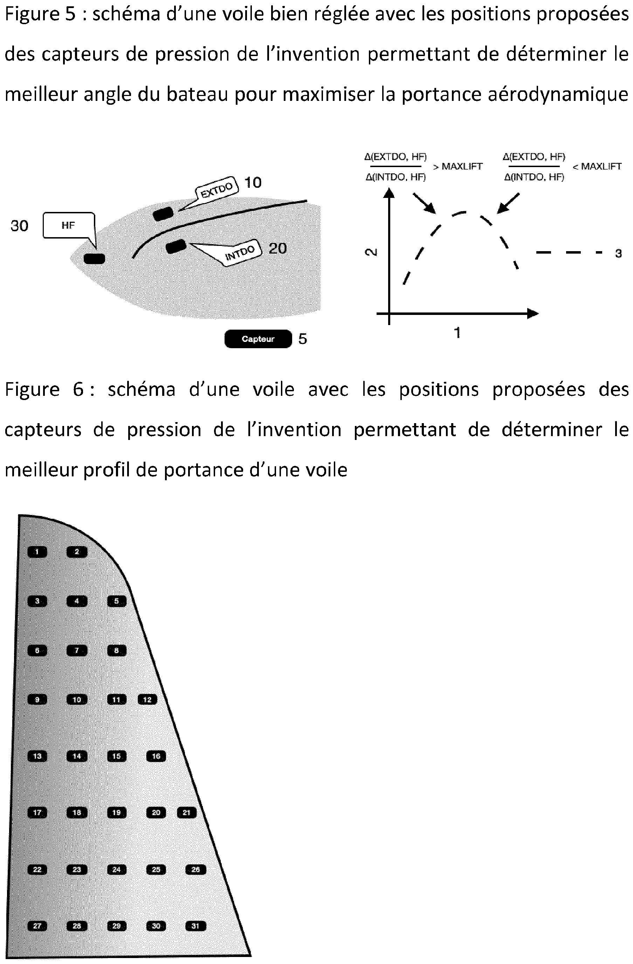

En outre, grâce à l'analyse des rapports des grandeurs Δ (EXTDO 10, HF 30) vs Δ (INTDO 20 - HF 30), il est maintenant possible d'interpréter en temps réel et sans aucune indication visuelle des voiles ou du bateau où l'on se situe sur la courbe de portance/trainée optimale comme illustré à la figure 5 avec en (2) le rapport portance/trainée et (1) l'angle d'attaque.

La grandeur MAXLIFT est une valeur de portance optimale qui est fonction de la vitesse du bateau, de la vitesse du vent et de l'angle du vent apparent, mais également fonction de tous les autres paramètres qui pourraient influer sur l'avancement optimum du bateau. Comme la position sur la courbe de portance est connue grâce aux rapports des grandeurs Δ (EXTDO 10, HF 30) et Δ (INTDO 20, HF 30), il est maintenant possible d'ajuster MAXLIFT par un coefficient calculé statistiquement et d'obtenir un rapport optimal de MAXLIFT en rapport de la traînée.

### Autres applications de l'invention :

### Analyse statistique et apprentissage approfondi

Comme décrit dans les exemples ci-dessus, l'invention est utilisée pour la prise de décision en temps réel par le marin. De plus, les valeurs générées par les capteurs de pression intrados (INTDO 20), extrados (EXTDO 10) et hors flux (HF 30) peuvent être enregistrées pour un traitement ultérieur et combinées avec tout autres données provenant de la navigation ou de l'environnement du bateau tel qu'énuméré ci-après (vitesse du bateau, vitesse du vent, angles du vent apparent, destination de la cible, courants, prévisions du vent, hauteur/période des vagues, etc.) et/ou les réglages des voiles. Le traitement après la navigation utilisant cette invention peut aider le navigateur à optimiser un ou des paramètres servant à la performance du bateau. La résultante de ces analyses peut également être réintégrée dans des systèmes intelligents d'assujettissement de la navigation en temps réel.

La méthode décrite s'applique à la grand-voile, foc et autres voiles, autres types de voile, espars ou appendices ayant un rôle aérodynamique ou hydrodynamique dans un système mécanique à optimiser.

### Mise au point de profil aérodynamique ou hydrodynamique

En multipliant le nombre de capteurs dans la voile, voir la figure 6, l'invention peut être utilisée pour mieux régler les profils des différentes zones de la voile, contributives pour l'avancement du bateau, mais aussi pour réinjecter dans un logiciel de simulation des données qui permettent d'affiner la forme de la voile que ce soit lors de sa conception, son utilisation ou son amélioration. De nombreux capteurs peuvent être placés régulièrement dans la voile pour permettre une vue précise de la répartition de la pression et la simulation de l'écoulement de l'air dans le système aérodynamique. La figure 6 donne un exemple des visualisations qui peuvent être réalisées avec une augmentation du nombre de capteurs. Dans cet exemple, 2x31 capteurs sont répartis de chaque côté de la voile, permettant une représentation graphique ou numérique des grandeurs Δ (EXTDO 10, HF 30)ₙ et Δ (INTDO 20, HF 30)ₙ sur la voile en temps réel ou pour du post-traitement.

## Revendications

1. Système de mesure de pressions destiné aux voiles de bateaux **caractérisé par le fait qu'**il est composé d'au moins trois capteurs de pression atmosphérique ou plus, arrangés de telle sorte qu'il mesure les pressions de l'intrados, l'extrados et hors flux.

2. Système arrangé tel que dans la revendication 1 et utilisé en temps réel pour aider le marin à optimiser le réglage d'une ou des voiles, le cap du bateau et/ou l'avancement du bateau.

3. Système arrangé tel que dans la revendication 1 et utilisé par le système de pilotage automatique pour optimiser le cap du bateau.

4. Système arrangé tel que dans la revendication 1 et utilisé par un système de traitement des données pour avertir le système décisionnel quant à de potentielles améliorations de réglage des voiles et/ou de leurs positions par rapport au flux principal (vent).

5. Système arrangé tel que dans la revendication 1 et utilisé en post-traitement pour optimiser les paramètres de réglages d'une ou des voiles et/ou de leurs positions par rapport au flux principal (vent).

6. Système de mesure composé d'au moins trois capteurs ou plus qui permet de mesurer les pressions sur l'intrados, l'extrados et hors flux de tout système aérodynamique utilisant l'effet de portance pour son fonctionnement.

7. Système de mesure décrit selon la revendication 6 utilisé pour optimiser la performance ou le rendement du dit système.
